(19)

**Europäisches Patentamt**
**European Patent Office**
**Office européen des brevets**

(11) **EP 1 623 600 B1**

(12) **EUROPEAN PATENT SPECIFICATION**

(45) Date of publication and mention
of the grant of the patent:
**16.09.2020 Bulletin 2020/38**

(51) Int Cl.:
***H04R 3/00*** *(2006.01)*

(21) Application number: **04731921.5**

(86) International application number:
**PCT/EP2004/004980**

(22) Date of filing: **10.05.2004**

(87) International publication number:
**WO 2004/100602 (18.11.2004 Gazette 2004/47)**

(54) **METHOD AND SYSTEM FOR COMMUNICATION ENHANCEMENT INA NOISY ENVIRONMENT**

VERFAHREN UND SYSTEM ZUR KOMMUNIKATIONSVERBESSERUNG IN EINER RAUSCHENDEN UMGEBUNG

PROCEDE ET SYSTEME D'AMELIORATION DES COMMUNICATIONS DANS UN ENVIRONNEMENT BRUYANT

(84) Designated Contracting States:
**AT BE BG CH CY CZ DE DK EE ES FI FR GB GR HU IE IT LI LU MC NL PL PT RO SE SI SK TR**

(30) Priority: **09.05.2003 EP 03010490**
**15.05.2003 EP 03010913**

(43) Date of publication of application:
**08.02.2006 Bulletin 2006/06**

(73) Proprietor: **Cerence Operating Company**
**Burlington, MA 01803 (US)**

(72) Inventors:
• **HAULICK, Tim**
**89143 Blaubeuren (DE)**
• **SCHMIDT, Gerhard, Uwe**
**89081 Ulm (DE)**

(74) Representative: **Grünecker Patent- und**
**Rechtsanwälte**
**PartG mbB**
**Leopoldstraße 4**
**80802 München (DE)**

(56) References cited:
**EP-A- 1 083 543      EP-A- 1 116 961**
**EP-A- 1 343 351      DE-A- 10 156 954**
**GB-A- 2 097 121      US-A1- 2003 072 461**

• **PATENT ABSTRACTS OF JAPAN vol. 1995, no. 10, 30 November 1995 (1995-11-30) & JP 7 176178 A (ALPINE ELECTRON INC), 14 July 1995 (1995-07-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention is directed to a method and a system for communication enhancement in a noisy environment, in particular, for improving communication in a vehicular cabin.

In a noisy environment, communication between two persons is often rendered difficult or almost impossible if the noise is at a similar loudness level as the speech. For example, in a vehicular cabin of a car, a strong background noise is present due to engine and wind noise. Further noise sources deteriorating the mutual understanding are loudspeakers of a car radio or a hands free system. Due to this plurality of different noise sources, a communication between front seat and back seat passengers is very difficult, in particular, when the vehicle is moving at a high speed.

EP 1 116 961 B1 discloses a system for tracking human speakers comprising a beamformer forming different beams, a comparator determining which beam has a highest value of signal to noise level and thus, indicating a most favorable direction for receiving the voice of the human speaker and comparing the beam power of each beam periodically and also comprising acoustic sensors arranged in an array along one direction or in a 2D or 3D array.

JP 7 176178 A discloses a vehicle communication system comprising four microphones and four loudspeakers that is configured to allow for verbal communication even when audio data is replayed by controlling output by the loudspeakers on response to a detection result indicating that a passenger is speaking.

GB 2 097 121 A and US 2003 072461 A disclose the usage of multiple microphone arrays in combination with beamformers to define a beam in more dimensions.

To improve communication in a vehicle, an indoor communication system for cars has been proposed in the prior art. According to this system, one microphone is associated with each passenger seat, including the drivers' seat. This means that in the vicinity of each seat or in the vicinity of a passenger's head sitting on the seat, a microphone is arranged. Each microphone records the speech of the respective passenger and the corresponding signals are output via loudspeakers in the car.

This prior art system has several drawbacks. First of all, the system has a poor signal-to-noise ratio (SNR). Furthermore, the system is highly inflexible; once installed, there is almost no possibility to vary the directivity and, in this way, suppress signals emanating from an unwanted direction. In addition, also a suppression of liveness is complicated. Furthermore, a detection of speech activity, i.e. detecting which passenger is speaking, is only possible under difficulties.

Therefore, it is the problem underlying the invention to provide a method that enables communication in a noisy environment, wherein the method has an improved signal-to-noise ratio and reduced liveness. This problem is solved by a method according to claim 1.

Accordingly, a method for enhancing communication in a noisy environment is provided comprising:

  receiving analog input signals emanating from at least two microphone arrays each comprising at least two microphones,

  converting the analog input signals into digital input signals;

  processing the digital input signals of each microphone array by a wanted signal beamformer to obtain a wanted signal in which the wanted signal components received from a preferred direction are transmitted without attenuation;

  processing the digital input signals of each microphone array by a blocking beamformer to obtain a blocking signal by suppressing the wanted signal components;

  detecting speech activity for each microphone array comprising determining a wanted signal power, a blocking signal power, and a back-ground noise signal power, the back-ground noise signal power being determined based on the wanted signal power and blocking signal power, and comparing the wanted signal power with the blocking signal power and the background noise signal power;

  applying an attenuation to the processed digital input signals of a microphone array if no speech activity is detected by the comparison of the wanted signal power with the blocking signal power and the background noise signal power for the microphone array; and

  outputting processed output signals to at least two loudspeakers.

A beamformer processes signals emanating from a microphone array to obtain a combined signal. In its simplest form (Delay-and-Sum beamformer), beamforming comprises delay compensation and summing of the signals. Beamforming allows to provide a specific directivity pattern for a microphone array.

Due to the use of input signals emanating from several microphones constituting a microphone array and the processing of these input signals by beamformers, the method allows an improvement of the signal-to-noise ratio. The use of microphone arrays and corresponding beamformers renders the method highly flexible. First of all, each beamformer of a microphone array can be adjusted independently of the other beamformers and, in this way, adapted to its ambient conditions. In particular, the obtained temporal and spatial information can be used to detect noise sources for each microphone array and to direct the zeros of the corresponding beamformer into the direction of these noise sources. Furthermore, the determined information can also be used to detect which one of the microphone arrays actually receives wanted speech signals and, in this way, identify an active speaker. Furthermore, due to the beamforming, an adaption of the directivity can be performed.

A wanted signal beamformer is configured to yield a signal in which the wanted signal components, i.e., signal components being received from a preferred direction, are transmitted without attenuation and signals from other directions are attenuated. A blocking beamformer, on the other hand, suppresses wanted signal components, i.e., signals being received from the preferred direction, and transmits signals from other directions of incidence with minimum distortions. The wanted signal and the blocking signal are used to determine speech activity information and directional information.

If the wanted signal beamformer is configured as an adaptive beamformer, it can "react" to variations in the input signals, for example, due to changes in the noise sources (switching on of car radio, opened window, enhanced motor noise, and the like) by re-determining relevant parameter values of the beamformer - such as filter coefficients - either continuously or on a regular basis during operation. With such an adaptive wanted signal beamformer, spatial zeros can be directed to specific noise sources. In this way, it is possible to specifically suppress unwanted signals without, for example, a complicated multi-channel echo cancellation.

Advantageously, processing the input signals of each microphone array can further comprise deciding whether a signal is transmitted from a wanted signal direction, wherein the wanted signal beamformer is an adaptive beamformer being adapted only if no signal is transmitted from the wanted signal direction.

Due to the deciding step, the adaption of the beamformer can be performed in a more precise manner. In particular, if no signal is transmitted from the wanted signal direction (for example, due to a speaker located in the wanted signal direction) no interference between such a signal and noise signals is present, thus, simplifying the adaption of the beamformer.

Preferably, deciding can comprise determining a wanted signal power and a blocking signal power, wherein the wanted signal beamformer is adapted only if the blocking signal power is larger than a predetermined constant times the wanted signal power.

This inequality yields a criterion that can be checked in a simple way. The predetermined constant is to be chosen such that the criterion is robust even if the signal powers are fluctuating.

Using this criterion, it is possible to determine which signals - from the wanted signal direction or the other directions - are dominating. The case of dominating signals from the blocking beamformer may arise if, for example, a microphone array mainly receives car radio signals but no speech signals of a corresponding speaker. In this case, an adaption of the wanted signal beamformer is performed by directing the spatial zeros of the beamformer to the car radio loudspeakers, thus, improving the signal-to-noise ratio of later speech signals.

According to a preferred embodiment, the above described methods can comprise echo cancelling and/or feedback cancelling and/or feedback suppressing the beamformer output signals. This yields a further improvement of the output signal. For example, a build-up (resonance rise) of the system can be avoided. In particular, potential feedback frequencies can be detected and corresponding notch filters can be placed at these frequencies.

According to an advantageous embodiment, the method can further comprise overdrive detecting preceding the processing of the input signals by the beamformers. This can be achieved, for example, by comparing the absolute value of each signal with a predetermined threshold. The overdrive detection serves to avoid a malfunctioning of the echo and/or feedback cancellation and/or feedback suppression due to any overdrive.

Speech activity is detected based on the temporal and spatial information determined by the beamformers. Speech activity means that a microphone array receives speech signals (wanted signals) from a preferred direction (wanted signal direction). If, for example, a first microphone array is provided for the drivers seat in a car and a second microphone array is provided for a rear passenger seat, speech activity for the first microphone array is only detected if the driver is speaking.

Preferably, speech activity can be detected for a microphone array using a two criteria: a temporal and a spatial criterion. Thus, speech activity is detected if the wanted signal power is larger than a first predetermined constant times the background noise signal power (first criterion) and larger than a second predetermined constant times the blocking signal power (second criterion). By comparing the wanted signal power with the background noise signal power, temporal information is checked and by comparing the wanted signal power with the blocking signal power, spatial information is checked. In this way, two criteria are used to detect speech activity, thus, allowing a very robust identification. It is to be pointed out that the use of microphone arrays allows in a highly advantageous manner to determine the required signals for the spatial criterion.

Preferably, the determined powers can be short-time powers. Furthermore, according to an advantageous embodiment, the background noise signal power $\hat{\sigma}_H(n)$ can be determined using the power of the wanted signal beam-former $\hat{\sigma}_N(n)$ according to

$$\hat{\sigma}_H(n) = \left\{\hat{\sigma}_H(n-1), \hat{\sigma}_N(n)\right\}(1+\varepsilon) \tag{1}$$

The constant $\varepsilon$ is small predetermined number between 0 and 1.

Thus, in a typical scenario, if no speech signal is present, the background noise signal power is determined as the wanted signal power times $(1 + \varepsilon)$. However, if the microphone array starts to record speech, the wanted signal power usually will be larger than the background noise signal power at a preceding time step; thus, the background noise signal power at a present time step is determined as the background noise signal power at the preceding time step times $(1 + \varepsilon)$.

In order to detect a most active speaker, i.e., a loudest speaker, according to a preferred embodiment, the method can further comprise comparing the wanted signal powers of at least two microphone arrays and determining a highest power.

This information can be used to attenuate or even suppress signals emanating from microphone arrays except for the microphone array of the loudest speaker.

If no speech activity is detected for a microphone array, it is not necessary to transmit the signals incident to this microphone array; in other words, signals stemming from such a microphone array can be attenuated.

Advantageously, applying the attenuation can be performed adaptively, preferably by varying the attenuation in predetermined timed steps between zero attenuation and a predetermined maximum attenuation.

For example, if only one speaker is speaking, i.e., only one microphone array is detecting speech activity, the corresponding signals can be transmitted without attenuation and the signals of ail other microphone arrays can be attenuated with a predetermined maximum attenuation factor. As soon as the speaker stops speaking, the signals of the corresponding microphone array can be attenuated by a small attenuation factor and, thus, waiting for the speaker to start again. However, should the speaker remain silent, the attenuation factor for the corresponding microphone array will be increased in predetermined time steps over a time interval up to the predetermined maximum attenuation.

According to a preferred embodiment of the previously discussed methods, processing can comprise adaptively determining a gain control of the input signals for each microphone array.

In this way, various factors such as loudness of a speaker or distance between the speaker's head and the corresponding microphone array can be taken into account.

In order to also consider variations or changes of these factors during operation, in an advantageous embodiment, determining a gain control can be performed adaptively.

According to a preferred embodiment, all previously discussed methods can further comprise selecting at least one output channel out of at least two output channels on which the process signals are to be output.

In particular, in the case of a vehicular cabin, each seat may have an associated microphone array and loudspeakerwherein the loudspeaker can be the standard car radio loudspeaker. In such a case, it is preferred that speech signals of a speaker are not output by a loudspeaker being associated with this speaker. For example, if the driver or the front seat passenger are speaking, the selecting step can result in that these signals of the front row can be output only by the rear loudspeakers.

Preferably, selecting the at least one output channel can comprise determining an amplification for each selected output channel. In this way, the ambient noise can be taken into account for each selected output channel separately. If, for example, a passenger opens the window, the output channel leading to the corresponding loudspeaker can be provided with a corresponding amplification.

The invention further provides a computer program product directly loadable into an internal memory of a digital computer, comprising software code portions for performing the steps of one of the previously described methods.

The invention further provides a computer program product stored on a medium readable by a computer system, comprising computer readable program means for causing a computer to perform the steps of one of the previously described methods.

In addition, the invention provides a communication system for performing the above-discussed methods. In particular, a communication system is provided comprising:

at least two microphone arrays each comprising

at least two microphones to produce microphone signals,

at least one analog/digital converter having an input for receiving said microphone signals and an output for providing digital microphone signals,

digital signal processing means having an input for receiving the digital microphone signals, being configured to process the digital microphone signals of each microphone array by a wanted signal beamformer (301) configured to obtain a wanted signal by transmitting wanted signal components received from a preferred direction without attenuation and by a blocking beamformer (302) configured to obtain a blocking signal by suppressing the wanted signal component, and

having an output to provide processed output signals to at least two loudspeakers, and wherein the digital signal processing means is further configured to detect speech activity for each microphone array by determining a wanted signal power, a blocking signal power, and a background noise signal power, the back-ground noise signal power being determined based on the wanted signal power and blocking signal power, and comparing the wanted signal power with the blocking signal power and the background noise signal power,

and wherein the digital signal processing means is further configured to determine and apply an attenuation to the processed digital microphone signals of a microphone array if no speech activity is detected by the comparison of the wanted signal power with the blocking signal power and the background noise signal power for the microphone array.

Such a communication system improves the speech or communication quality in a noisy environment, for example, in a vehicular cabin, and can be implemented in a very compact form.

According to an advantageous embodiment, the digital signal processing means can be configured to decide whether a signal is transmitted from a wanted signal direction, wherein the wanted signal beamformer is an adaptive beamformer being configured to be adapted only if no signal is transmitted from the wanted signal direction.

In an advantageous embodiment, the digital signal processing means can be configured to select at least one loudspeaker out of the at least two loudspeakers upon which the process signals are to be output.

The invention further provides a vehicular cabin comprising one of the previously discussed communication systems and at least two loudspeakers wherein each microphone array and each loudspeaker is associated with a passenger's seat.

In particular, the loudspeakers can be the standard car radio loudspeakers that are typically already present in a vehicular cabin. In this way, communication in a vehicular cabin can be highly improved without requiring sophisticated modifications of the vehicular cabin.

Further features and advantages of the invention will be described in the following with reference to examples and to the drawings in which:

Fig. 1    is a schematic overview of a method to enhance communication in a vehicular cabin;

Fig. 2    depicts a block diagram of a pre-processing of a microphone signal;

Fig. 3    depicts a block diagram of processing a signal by a wanted signal beamformer and a blocking beamformer;

Fig. 4    depicts an adaptive wanted signal beamformer with a Griffith-Jim structure;

Fig. 5    depicts a block diagram of an attenuation control;

Fig. 6    illustrates in a block diagram the determining of mixing coefficients for the attenuation.

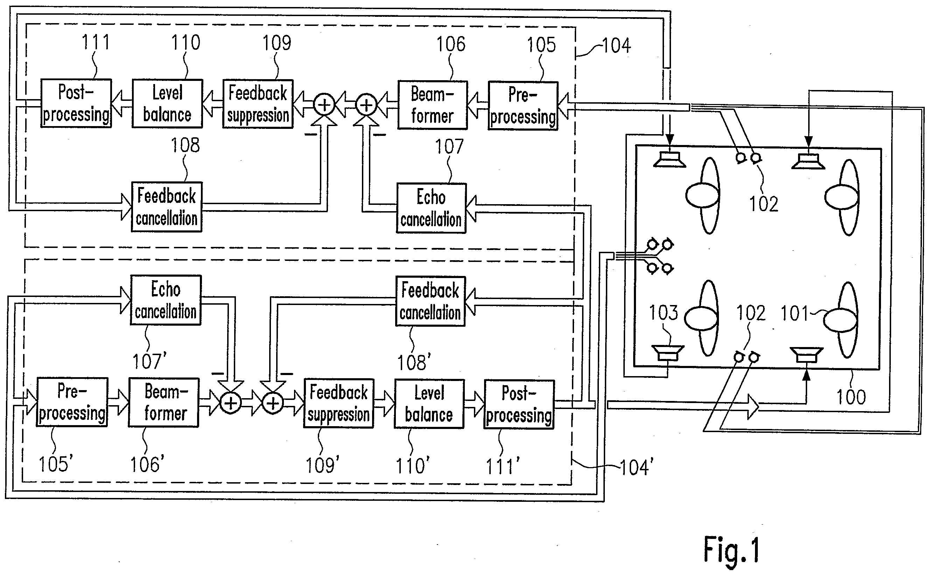

An overview of a system for improving communication in a vehicular cabin 100 is shown in Fig. 1. The vehicular cabin 100 comprises four passenger seats (not shown) and four passengers 101. With each passenger, a microphone array comprising two microphones 102 and a loudspeaker 103 are associated. For the front passengers, the microphone arrays are arranged in the center between the passengers. They can be provided at the car roof, for example. At the rear seats, the microphone arrays are provided at the left and right side of the passengers, respectively, for example, in the car door.

The microphone arrays record signals. The signals emanating from the microphone arrays enter digital signal processing means 104 and 104'. In the example shown in Fig. 1, a first signal processing means 104 is responsible for processing the signals emanating from the microphones associated with the rear passengers and a second digital signal processing means 104' is associated with the signals emanating from the microphones associated with the front passengers. However, this is only a matter of choice and the signals emanating from the different microphone arrays and also the signals output by the different speakers can be processed in different combinations.

The signals emanating from the microphone arrays, first of all, are processed by an analog/digital converter which is part of pre-processing means 105 and 105'. Of course, the analog/digital converter can also be present separately. The pre-processing step is followed by a beamformer 106 and 106'. The beamformers serve to obtain information on the temporal signal behavior and also spatial information about the signal sources of both wanted (e.g. passengers) and noise signal sources (e.g. car radio loudspeakers).

To avoid feedback effects, echo and feedback components are subtracted from the signals via adaptive echo cancellation 107 and 107' and feedback cancellation 108 and 108'. For controlling these cancellation filters, a saturation detection can be used as will be also described in more detail below.

In order to further reduce any feedback effects, the system can try to detect any build up of the system and to react accordingly. For this, potential feedback frequencies are detected in a suitable way, and, then, corresponding notch filters placed at these frequencies. Adaptive notch filters 109 and 109', therefore, detect potential feedback frequencies and attenuate these.

Based on the temporal and the spatial information from the beamformers, attenuators are controlled such that, for example, only the loudest speaker is switched through. Such an attenuation depending on the other signals is performed by the level balance 110 and 110'.

It is to be noted that also a so-called double talk is possible wherein not only one, but several speakers can be switched through. In any case, the signals of microphone arrays associated with non-active speakers are attenuated. The level balance 110 and 110' is also responsible for determining an amplification for the output signal depending on a background noise.

The level balance is followed by a post-processing 111 and 111', applying a boundary characteristic. The output signals of the digital signal processing means 104 and 104' are fed, first of all, to corresponding loudspeakers 103. In the example shown in Fig. 1, signals emanating from rear microphone arrays can only be output by front loudspeakers and vice versa. This is, however, not a necessary restriction; the system can also be configured, for example, such that the processed signals can be output via all loudspeakers except the loudspeaker corresponding to the microphone array of the input signals.

Furthermore, the processed signals are also fed to the feedback cancellation 108 and 108' of the same digital signal processing means and also to the echo cancellation means 107 and 107' of the other digital signal processing means.

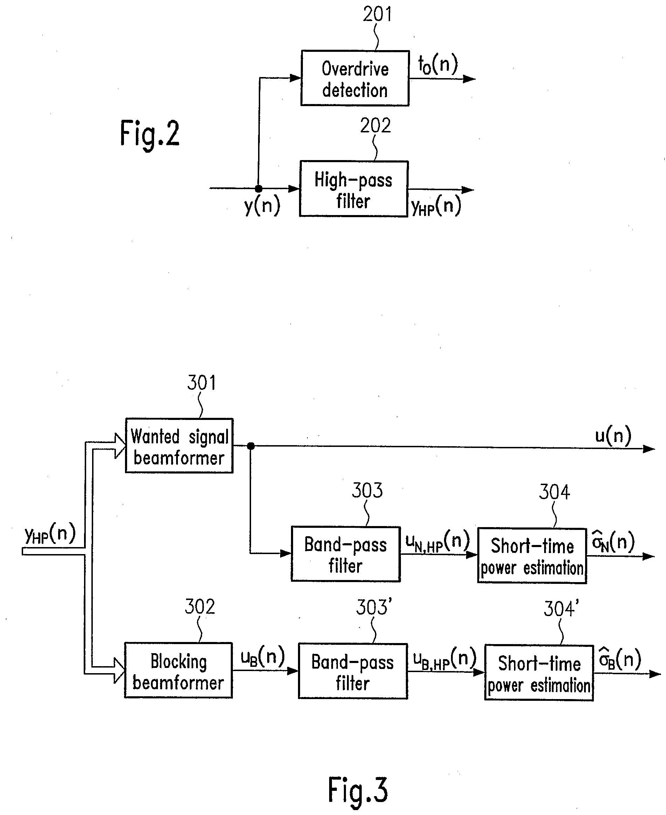

The pre-processing step is illustrated in more detail in Fig. 2. For all incoming microphone signals y(n) an overdrive detection 201 is performed. This is accomplished by comparing the absolute value of each signal value with a predetermined threshold value. If the absolute value of the signal value is larger than the threshold, a detection variable $t_0(n)$ is set. This detection variable is held for a predetermined time interval. During this time interval, all adaptive algorithms are controlled more slowly. In this way, a malfunctioning of the cancellation of echoes and feedback due to an overdrive can be avoided.

Furthermore, each microphone signal $y(n)$ is passed through a high pass filter 202 yielding a high pass filtered microphone signal $y_{HP}(n)$. For example, signal components (such as background noise) below the typical lowest speech frequencies (100Hz - 200Hz) can be removed. As in the case of all other signal processing components, the delay time of the high pass filter should be minimal which is to be taken into account when designing the filter. Preferably, the delay time through the whole signal processing system should be less than 10ms.

The high pass filtered microphone signals $y_{HP}(n)$ are supplied to the beamformers 106 or 106'. A preferred example of such a beamformer is illustrated in Fig. 3. The beamformer comprises a wanted signal beamformer 301 and a blocking beamformer 302. The signals $y_{HP}(n)$ are supplied to both the wanted signal beamformer 301 and the blocking beamformer 302. In the wanted signal beamformer 301, the microphone signals are combined by digital filters in such a way that signals stemming from a preferred direction (direction from the corresponding microphone array to a respective passenger) are transmitted without attenuation and the signal components of all other directions are attenuated as high as possible. In the blocking beamformer 302, on the other hand, all signals from the wanted signal direction are suppressed as far as possible, and signal components from all other directions of incidence are to be transmitted with minimum distortion.

The output signals of the wanted signal beamformer $u(n)$ and of the blocking beamformer $u_B(n)$ will be used in the following signal processing units for controlling different components. In particular, information regarding speech activity and directional information will be obtained based on these signals.

First of all, both signals are passed through band pass filters 303 and 303' yielding output signals $u_{N,HP}(n)$ and $u_{B,HP}(n)$. Low frequency signal components will be removed in this way. As for low frequencies, the wanted signal beamformer has almost no directivity and almost no signals can pass the blocking beamformer. For high frequencies, both beamformers have a poor directivity. These band pass filtered signals are used to determine short time powers $\hat{\sigma}_N(n)$ and $\hat{\sigma}_B(n)$. According to a first order recursive filtering:

$$\hat{\sigma}_N(n) = \beta\hat{\sigma}_N(n-1)+(1-\beta)\big|u_{N,HP}(n)\big|, \qquad (2)$$

$$\hat{\sigma}_B(n) = \beta\hat{\sigma}_B(n-1)+(1-\beta)\big|u_{B,HP}(n)\big|. \qquad (3)$$

The quantities $u_{N,HP}(n)$ and $u_{B,HP}(n)$ designate the high pass filtered form of the wanted signal beamformer output and the blocking beamformer output. Preferably, the constant $\beta$ should take a value $\beta \in [0.9,...,0.999]$. By comparing both short time powers, different speech scenarios can be determined, for example:

- if no passenger is speaking, a diffuse noise field is present in the vehicular cabin and both short time powers should have approximately the same value (after removal of distortions);

- if a passenger is speaking onto which the corresponding wanted signal beamformer is directed, the short time power of this wanted signal beamformer will be larger than the short time power of the blocking beamformer output;

- if one of the other passengers is speaking which is not located in wanted signal direction, the short time power of the blocking beamformer will be larger than the short time power of the wanted signal beamformer.

As already stated above, also in the case of the beamformers and the band pass filters, the delay time should be minimal.

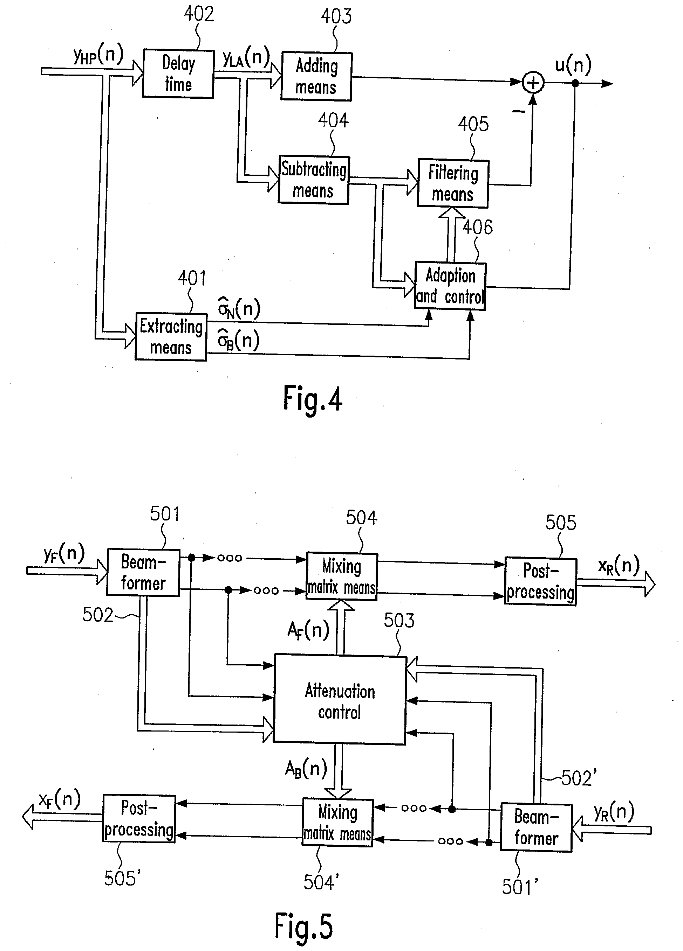

The directivity of the wanted signal beamformer can be further enhanced by taking an adaptive beamformer. This can be achieved, for example, by using a so-called Griffith-Jim structure which is an example of a generalized sidelobe canceller (GSC) and illustrated in Fig. 4. The extraction of the spatial information $\hat{\sigma}_N(n)$ and $\hat{\sigma}_B(n)$ is determined by extraction means 401 as already described above. Only the output signal of the wanted signal beamformer u($n$) is determined using the enlarged adaptive structure.

As in a standard beamformer, first of all, a delay time compensation 402 is performed yielding an output signal $y_{LA}(n)$. Now, two processing paths are followed. On a first path, the signals corresponding to the different microphones of a microphone array are summed in an adding means 403 as in the case of a standard fixed beamformer. On the second, adaptive path, the signals of the different microphones of the microphone array are subtracted from each other by a subtracting means 404. The resulting signals are passed through adaptive filters 405, the adaption and control of which is performed by the adaption and control means 406.

The adaptive structure used in this invention differs from prior art methods in the control of the adaptive part of the beamformer. An adaption is only performed if no signal from the wanted signal direction is transmitted. This condition is checked using the inequality:

$$\hat{\sigma}_B(n) > K_{BF}\hat{\sigma}_N(n) \qquad (4)$$

wherein the constant $K_{BF}$ is chosen appropriately. Due to this type of control, it is possible to operate the system of the invention even if specific noise sources such as a car radio are present. If none of the passengers is speaking, the signals of the car radio are output by the standard car radio loudspeakers. The controlled adaption of the mounted signal beamformer allows to direct the spatial zeros of the beamformer to the position of the loudspeakers. In this way, it is possible to achieve a highly advantageous signal suppression (e.g., of the car radio signals) without complicated multi-channel echo cancellation. If the same loudspeakers are used at the same time for reproducing the car radio signals and the speech signals of the communication system, an adaption during speech pauses increases the stability of the communication system and reduces the liveness of the signals to be reproduced.

In order to reduce the echo and feedback components in the beamformer output signals, an echo cancellation 107 and 107' and a feedback cancellation 108 and 108' are determined. For controlling the cancellation filters, an overdrive detection as described above can be used to further reduce any feedback effects; potential build up frequencies are detected by the feedback suppression means 109 and 109' in order to place corresponding narrow band notch filters at these frequencies.

An important component of the method and the system of the invention is the adaptive attenuation control. This attenuation control can be divided into three parts:

1) First of all, it is to be detected whether one or several of the passengers are speaking, the signal of the respective active passenger or passengers are to be output by loudspeakers located in the vicinity of the other passengers.

2) Since the position of the seats and, therefore, also the distance between the speakers and the microphones of a corresponding microphone array is known *a priori* only approximately, an automatic gain control is to be determined for each beamformer output. In this way, not only a varying loudness due to varying distances but also level differences due to speakers having different loudness can be compensated for.

3) For each seat, an individual output volume can be determined. This volume depends on the respective background noise levels and may vary with different driving scenarios (e.g.,. in the city or on the highway). This volume control or amplification will be determined for each seat or output loudspeaker separately. If, for example, one of the passengers opens a window, the corresponding output volume for this seat can be increased with respect to the other seats.

Fig. 5 illustrates an example of an attenuation control. Signals stemming from front microphones $y_F(n)$ and rear microphones $y_R(n)$ are supplied to corresponding beamformer 501 and 501'. Short time powers 502 and 502' are supplied to the central attenuation control 503. This attenuation control yields mixing matrices to be applied to the signal by mixing matrix means 504 and 504'. After a post-processing 505 and 505', output signals for the rear loudspeakers $x_R(n)$ and for the front loudspeakers $x_F(n)$ are obtained.

In the two mixing matrices, $A_F(n)$ and $A_R(n)$, the output signals of the front and the rear beamformers are combined for the post-processing and, thus, for the rear and the front loudspeakers. By designating the output signals of the front beamformer by $u_{F,left}(n)$ and $u_{F,right}(n)$ and the output signals of the rear beamformer by $u_{R,left}(n)$ and $u_{R,right}(n)$, the mixing can be described by

$$\underbrace{\begin{bmatrix} d_{R,left}(n) \\ d_{R,right}(n) \end{bmatrix}}_{\mathbf{d}_R(n)} = \underbrace{\begin{bmatrix} a_{F,11}(n) & a_{F,12}(n) \\ a_{F,21}(n) & a_{F,22}(n) \end{bmatrix}}_{\mathbf{A}_F(n)} \underbrace{\begin{bmatrix} u_{F,left}(n) \\ u_{F,right}(n) \end{bmatrix}}_{\mathbf{u}_F(n)} \qquad (5)$$

$$\underbrace{\begin{bmatrix} d_{F,left}(n) \\ d_{F,right}(n) \end{bmatrix}}_{\mathbf{d}_F(n)} = \underbrace{\begin{bmatrix} a_{R,11}(n) & a_{R,12}(n) \\ a_{R,21}(n) & a_{R,22}(n) \end{bmatrix}}_{\mathbf{A}_R(n)} \underbrace{\begin{bmatrix} u_{R,left}(n) \\ u_{R,right}(n) \end{bmatrix}}_{\mathbf{u}_R(n)} \qquad (6)$$

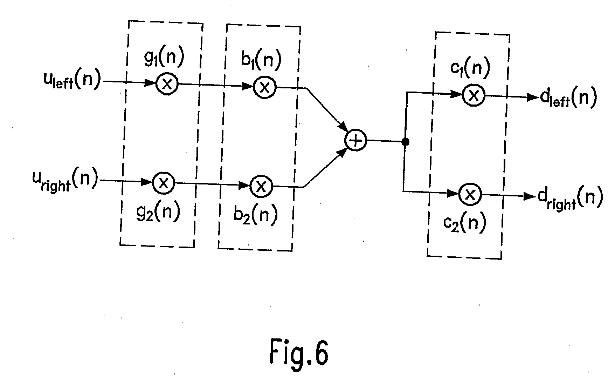

When determining the mixing coefficients, the three parts of the attenuation control will be determined separately (see Fig. 6). In a first step, an automatic gain control will be calculated. During speech activity, the speech level is determined and compared to a reference value. If the speech level (increased or decreased by the corresponding corrections factor) is smaller than the reference value, a small increase of the correction value is performed; if, on the other hand, the speech level is larger than the reference value, the correction value will be decreased.

In a second step, the active speaker is determined. Only the beamformer output signal of the active speaker will be output by the loudspeakers being situated in the vicinity of the other passengers. In the present example, there is only an output from the front row to the rear row and vice versa. A speech enhancement from the left to the right or vice versa is not performed. However, this represents only an illustrative example which is not intended as a restriction; in particular, other combinations of input and output are possible as well.

In a third step, an output volume depending on the noise level is determined for each seat. This value does not depend of the respective speech activity but only on the background noise level specific for each seat.

These components of the mixing matrices is illustrated in Fig. 6. For sake of clarity, the index identifying the front or rear row has been omitted. First of all, the coefficients of the automatic gain control $g_i(n)$ are determined. Then, the coefficients of the speech controlled attenuation $b_i(n)$ and the coefficients of the noise dependent volume adaption $c_i(n)$ are determined. This yields the following mixing coefficients:

$$a_{11}(n) = g_1(n)b_1(n)c_1(n) \qquad (7)$$

$$a_{12}(n) = g_2(n)b_2(n)c_1(n) \qquad (8)$$

$$a_{21}(n) = g_1(n)b_1(n)c_2(n) \qquad (9)$$

$$a_{22}(n) = g_2(n)b_2(n)c_2(n) \qquad (10)$$

For the automatic gain control, a mean speech level $\hat{\sigma}_{N,Act}(n)$ is estimated during speech activity. This is achieved by a multiplicative correction of the form

$$\hat{\sigma}_{N,Act}(n) = \begin{cases} \hat{\sigma}_{N,Act}(n-1)K(n), & \text{for speech activity} \\ \hat{\sigma}_{N,Act}(n-1), & \text{else.} \end{cases} \qquad (11)$$

The correction factor is determined according to

$$K(n) = \begin{cases} K_r, & \text{if} \quad \hat{\sigma}_{N,Act}(n-1) < \hat{\sigma}_{N,Act}(n) \\ K_f, & \text{else.} \end{cases} \qquad (12)$$

wherein $K_r > 1$ and $K_f < 1$. As in the previous section, the index identifying the respective seat has been omitted for sake of clarity. To determine the speech activity, for each seat, the background noise estimation $\hat{\sigma}_H(n)$ is performed. For this, the short time power of the wanted signal beamformer $\hat{\sigma}_N(n)$ is determined according to Equation (1).

In order to detect speech activity, the following conditions are to be fulfilled:

$$\hat{\sigma}_N(n) > K_1\hat{\sigma}_H(n), \qquad (13)$$

$$\hat{\sigma}_N(n) > K_2\hat{\sigma}_B(n), \qquad (14)$$

By condition (13), temporal information and by condition (14) spatial information regarding speech detection are checked. The use of microphone arrays comprising at least two microphones enables to obtain the required signals for the spatial condition (14). With high background noise levels, the spatial criteria seems to be more robust than the temporal criteria.

To determine the attenuators $b_i(n)$, a so-called nominal status is estimated. This is achieved by detecting whether one or several passengers are speaking. In analogy to the speech activity detection that was previously discussed; in particular, conditions (13) and (14) are both to be fulfilled. If this is the case, a loudest speaker is determined by comparing the beamformer output powers. For the seat with the loudest speaker, the nominal attenuation is set to 0dB. All other seats will have a nominal attenuation value larger than 0dB. If no passenger is speaking at all, the same procedure is performed with the exception that only the attenuation value of the previously active speaker is set to a lower attenuation value. If no speech activity is detected over a predetermined time interval, also the attenuation of the previous active passenger is set to the value of the other maximum attenuation.

The nominal values of the attenuation are used to determine the proper attenuation factors $b_i(n)$ via a first order recursive smoothing with suitable time constants. If two or more passengers are speaking at the same time, the detection of the respective most active passenger, depending on the volume of each speaker, will usually change several times. Due to the recursive smoothing, the attenuators of the active passengers will add only a small attenuation. In this way, several directions can be enhanced at the same time.

After having weighted and summed in pairs the beamformer output signals of the different seats, a noise dependent amplification $c_i(n)$ is determined for each seat.

For the case that the vehicle is not moving and the engine is switched off, these coefficients are normalized to 0dB. With increasing driving speed, also the roll wind and engine noise is increasing. In order to take these changes into account, the output signal of the system are to be amplified. For this, the estimated background noise levels $\hat{\sigma}_{H,i}(n)$ are compared with several thresholds. As soon as the background noise level passes one of the thresholds, an increase of the output volume is performed. This can be done, for example, in the range of 0dB to about 10 dB. As the background noise estimations are determined based on the beamformer output powers and, thus, a spatial separation of the different seats is possible, an individual output volume can be determined for each seat. This is particularly desirable if, for example, one of the windows of the vehicle is open. In this case, the volume mainly of the loudspeakers in the vicinity of this seat is to be increased. Before outputting the weighted and - depending on the background noise - amplified signal via the loudspeakers, limiter characteristics can be applied to the signals. In this way, short but loud passages can be diminished without reducing the volume of the overall signal.

**Claims**

1.  Method for enhancing communication in a noisy environment comprising:

    receiving analog input signals emanating from at least two microphone arrays each comprising at least two microphones (102),
    converting the analog input signals into digital input signals;
    processing the digital input signals of each microphone array by a wanted signal beamformer (301) to obtain a wanted signal in which the wanted signal components received from a preferred direction are transmitted without attenuation;
    processing the digital input signals of each microphone array by a blocking beamformer (302) to obtain a blocking signal by suppressing the wanted signal components;
    detecting speech activity for each microphone array comprising determining a wanted signal power, a blocking signal power, and a back-ground noise signal power, the back-ground noise signal power being determined based on the wanted signal power and blocking signal power, and comparing the wanted signal power with the blocking signal power and the background noise signal power;
    applying an attenuation to the processed digital input signals of a microphone array if no speech activity is detected by the comparison of the wanted signal power with the blocking signal power and the background noise signal power for the microphone array; and
    outputting processed output signals to at least two loudspeakers.

2.  Method according to claim 1, wherein the wanted signal beamformer (301) for processing of the digital input signals of each microphone array is an adaptive beamformer.

3.  Method according to claim 2, wherein processing the digital input signals of each microphone array further comprises deciding whether a signal is transmitted from a wanted signal direction, wherein the wanted signal beamformer (301) is adapted only if no signal is transmitted from the wanted signal direction.

4.  Method according to claim 3, wherein deciding comprises determining a wanted signal power and a blocking signal power, wherein the wanted signal beamformer (301) is adapted only if the blocking signal power is larger than a predetermined constant times the wanted signal power.

5.  Method according to claim 1, further comprising comparing the wanted signal powers of at least two microphone arrays and determining a highest power.

6.  Method according to claim 5, wherein applying the attenuation is performed adaptively, preferably by varying the attenuation in predetermined time steps between zero attenuation and a predetermined maximum attenuation.

7.  Method according to one of the preceding claims, wherein processing comprises adaptively determining a gain control of the analog input signals for each microphone array.

8.  Method according to one of the preceding claims, further comprising selecting at least one output channel out of at least two output channels on which the processed signals are to be output.

9.  Method according to claim 8, wherein selecting the at least one output channel comprises determining an amplification for each selected output channel.

10. Computer program product stored on a medium readable by a computer system, comprising computer readable program means for causing a computer to perform the steps of the method according to one of the claims 1 to 9.

11. Communication system comprising
at least two microphone arrays each comprising
at least two microphones to produce microphone signals,
at least one analog/digital converter having an input for receiving said microphone signals and an output for providing digital microphone signals,
digital signal processing means having an input for receiving the digital microphone signals, being configured to process the digital microphone signals of each microphone array by a wanted signal beamformer (301) configured to obtain a wanted signal by transmitting wanted signal components received from a preferred direction without attenuation and by a blocking beamformer (302) configured to obtain a blocking signal by suppressing the wanted signal component, and
having an output to provide processed output signals to at least two loudspeakers, and wherein the digital signal processing means is further configured to detect speech activity for each microphone array by determining a wanted signal power, a blocking signal power, and a back-ground noise signal power, the back-ground noise signal power being determined based on the wanted signal power and blocking signal power, and comparing the wanted signal power with the blocking signal power and the background noise signal power,
and wherein the digital signal processing means is further configured to determine and apply an attenuation to the processed digital microphone signals of a microphone array if no speech activity is detected by the comparison of the wanted signal power with the blocking signal power and the background noise signal power for the microphone array.

12. Communication system according to claim 11, wherein the digital signal processing means is further configured to select at least one loudspeaker out of the at least two loudspeakers (103) on which the processed signals are to be output.

13. Vehicular cabin comprising a communication system according to claim 11 or 12 and at least two loudspeakers (103), wherein each microphone array and each loudspeaker is associated with a passenger seat.

**Patentansprüche**

1. Verfahren zur Verbesserung der Kommunikation in einer verrauschten Umgebung, mit:

Empfangen analoger Eingangssignale, die aus mindestens zwei Mikrofonarrays stammen, die jeweils mindestens zwei Mikrofone (102) aufweisen,
Umwandeln der analogen Eingangssignale in digitale Eingangssignale;
Verarbeiten der digitalen Eingangssignale jedes Mikrofonarrays durch einen Nutzsignalstrahlformer (301), um ein Nutzsignal zu erhalten, in welchem die Nutzsignalkomponenten, die aus einer bevorzugten Richtung empfangen werden, ohne Abschwächung übertragen werden;
Verarbeiten der digitalen Eingangssignale jedes Mikrofonarrays durch einen Sperrstrahlformer (302), um ein Sperrsignal durch Unterdrückung der Nutzsignalkomponenten zu erhalten;
Erkennen einer Sprachaktivität für jedes Mikrofonarray mit: Ermitteln einer Nutzsignalleistung, einer Sperrsignalleistung und einer Hintergrundrauschsignalleistung, wobei die Hintergrundrauschsignalleistung auf der Grundlage der Nutzsignalleistung und der Sperrsignalleistung ermittelt wird, und Vergleichen der Nutzsignalleistung mit der Sperrsignalleistung und der Hintergrundrauschsignalleistung;
Anwenden einer Abschwächung auf die verarbeiteten digitalen Eingangssignale eines Mikrofonarrays, wenn keine Sprachaktivität durch den Vergleich der Nutzsignalleistung mit der Sperrsignalleistung und der Hintergrundrauschsignalleistung für das Mikrofonarray erkannt wird; und
Ausgeben verarbeiteter Ausgangssignale an mindestens zwei Lautsprecher.

2. Verfahren nach Anspruch 1, wobei der Nutzsignalstrahlformer (301) zur Verarbeitung der digitalen Eingangssignale jedes Mikrofonarrays ein adaptiver Strahlformer ist.

3. Verfahren nach Anspruch 2, wobei Verarbeiten der digitalen Eingangssignale jedes Mikrofonarrays ferner umfasst: Entscheiden, ob ein Signal aus einer Nutzsignalrichtung übertragen wird, wobei der Nutzsignalstrahlformer (301) nur angepasst wird, wenn kein Signal aus der Nutzsignalrichtung übertragen wird.

**4.** Verfahren nach Anspruch 3, wobei das Entscheiden umfasst. Ermitteln einer Nutzsignalleistung und einer Sperrsignalleistung, wobei der Nutzsignalstrahlformer (301) nur angepasst wird, wenn die Sperrsignalleistung um ein vorbestimmtes konstantes Vielfaches in Bezug auf die Nutzsignalleistung größer ist.

**5.** Verfahren nach Anspruch 1, das ferner umfasst: Vergleichen der Nutzsignalleistungen mindestens zweier Mikrofonarrays und Ermitteln einer höchsten Leistung.

**6.** Verfahren nach Anspruch 5, wobei Anwenden der Abschwächung adaptiv ausgeführt wird, vorzugsweise durch Variieren der Abschwächung in vorbestimmten Zeitschritten zwischen Null Abschwächung und einer vorbestimmten maximalen Abschwächung.

**7.** Verfahren nach einem der vorhergehenden Ansprüche, wobei das Verarbeiten umfasst: adaptives Ermitteln einer Verstärkungssteuerung der analogen Eingangssignale für jedes Mikrofonarray.

**8.** Verfahren nach einem der vorhergehenden Ansprüche, das ferner umfasst: Auswählen mindestens eines Ausgangskanals von mindestens zwei Ausgangskanälen, über den die verarbeiteten Signale auszugeben sind.

**9.** Verfahren nach Anspruch 8, wobei Auswählen des mindestens einen Ausgangskanals umfasst: Ermitteln einer Verstärkung für jeden ausgewählten Ausgangskanal.

**10.** Computerprogrammprodukt, das in einem Medium gespeichert ist, das von einem Computersystem lesbar ist, mit computerlesbaren Programmkomponenten, die den Computer veranlassen, die Schritte eines Verfahrens nach einem der Ansprüche 1 bis 9 auszuführen.

**11.** Kommunikationssystem, mit:

mindestens zwei Mikrofonarrays, die jeweils
mindestens zwei Mikrofone zur Erzeugung von Mikrofonsignalen aufweisen,
mindestens einem Analog/Digitalwandler mit einem Eingang zum Empfangen der Mikrofonsignale und einem Ausgang zur Bereitstellung digitaler Mikrofonsignale,
einer digitalen Signalverarbeitungseinrichtung mit einem Eingang zum Empfangen der digitalen Mikrofonsignale, wobei die Einrichtung ausgebildet ist, die digitalen Mikrofonsignale jedes Mikrofonarrays durch einen Nutzsignalstrahlformer (301), der ausgebildet ist, ein Nutzsignal zu erhalten, indem Nutzsignalkomponenten, die aus einer bevorzugten Richtung empfangen werden, ohne Abschwächung zu übertragen werden, und durch einen Sperrstrahlformer (302) zu verarbeiten, der ausgebildet ist, ein Sperrsignal durch Unterdrücken der Nutzsignalkomponente zu erhalten, und
einem Ausgang zur Bereitstellung verarbeiteter Ausgangssignale für mindestens zwei Lautsprecher, wobei die digitale Signalverarbeitungseinrichtung ferner ausgebildet ist, eine Sprachaktivität für jedes Mikrofonarray zu erkennen, indem eine Nutzsignalleistung, eine Sperrsignalleistung und eine Hintergrundrauschsignalleistung ermittelt werden, wobei die Hintergrundrauschsignalleistung auf der Grundlage der Nutzsignalleistung und der Sperrsignalleistung ermittelt wird, und indem die Nutzsignalleistung mit der Sperrsignalleistung und der Hintergrundrauschsignalleistung verglichen wird,
und wobei die digitale Signalverarbeitungseinrichtung ferner ausgebildet ist, eine Abschwächung zu ermitteln und diese auf die verarbeiteten digitalen Mikrofonsignale eines Mikrofonarrays anzuwenden, wenn keine Sprachaktivität durch den Vergleich der Nutzsignalleistung mit der Sperrsignalleistung und der Hintergrundrauschsignalleistung für das Mikrofonarray erkannt wird.

**12.** Kommunikationssystem nach Anspruch 11, wobei die digitale Signalverarbeitungseinrichtung ferner ausgebildet ist, mindestens einen Lautsprecher der mindestens zwei Lautsprecher (103) auszuwählen, mit welchem die verarbeiteten Signale auszugeben sind.

**13.** Fahrzeugkabine mit einem Kommunikationssystem nach Anspruch 11 oder 12 und mit mindestens zwei Lautsprechern (103), wobei jedes Mikrofonarray und jeder Lautsprecher einem Kabinensitz zugeordnet sind.

**Revendications**

**1.** Procédé pour améliorer les communications dans un environnement bruyant comprenant :

la réception des signaux d'entrée analogiques émanant d'au moins deux réseaux de microphones comprenant chacun au moins deux microphones (102),

la conversion des signaux d'entrée analogiques en signaux d'entrée numériques;

le traitement des signaux d'entrée numériques de chaque réseau de microphones par un formateur de faisceau de signal utile (301) pour obtenir un signal utile dans lequel les composantes du signal utile reçues d'une direction préférée sont transmises sans atténuation;

le traitement des signaux d'entrée numériques de chaque réseau de microphones par un formateur de faisceau bloquant (302) pour obtenir un signal bloquant en supprimant les composantes du signal utile;

la détection de l'activité vocale pour chaque réseau de microphones comprenant la détermination d'une puissance de signal utile, d'une puissance de signal de blocage et d'une puissance de signal de bruit de fond, la puissance de signal de bruit de fond étant déterminée sur la base de la puissance de signal utile et de la puissance de signal de blocage, et la comparaison de la puissance de signal utile avec la puissance de signal de blocage et la puissance de signal de bruit de fond;

l'application d'une atténuation aux signaux d'entrée numériques traités d'un réseau de microphones si aucune activité vocale n'est détectée par la comparaison de la puissance du signal utile avec la puissance du signal de blocage et la puissance du signal de bruit de fond pour le réseau de microphones; et

l'émission de signaux de sortie traités vers au moins deux haut-parleurs.

2. Procédé selon la revendication 1, dans lequel le formateur de faisceau de signal utile (301) pour le traitement des signaux d'entrée numériques de chaque réseau de microphones est un formateur de faisceau adaptatif.

3. Procédé selon la revendication 2, dans lequel le traitement des signaux d'entrée numériques de chaque réseau de microphones comprend en outre la décision de savoir si un signal est transmis depuis une direction de signal utile, dans lequel le formateur de faisceau de signal utile (301) est prévu uniquement si aucun signal n'est transmis depuis la direction du signal utile.

4. Procédé selon la revendication 3, dans lequel la décision comprend la détermination d'une puissance de signal utile et d'une puissance de signal de blocage, dans lequel le formateur de faisceau de signal utile (301) est adapté uniquement si la puissance de signal de blocage est supérieure à une constante prédéterminée multipliée par la puissance de signal utile.

5. Procédé selon la revendication 1, comprenant en outre la comparaison des puissances de signal utile d'au moins deux réseaux de microphones et la détermination d'une puissance maximale.

6. Procédé selon la revendication 5, dans lequel l'application de l'atténuation est effectuée de manière adaptative, de préférence en faisant varier l'atténuation par pas de temps prédéterminés entre une atténuation nulle et une atténuation maximale prédéterminée.

7. Procédé selon l'une des revendications précédentes, dans lequel le traitement comprend la détermination adaptative d'une commande de gain des signaux d'entrée analogiques pour chaque réseau de microphones.

8. Procédé selon l'une des revendications précédentes, comprenant en outre la sélection d'au moins un canal de sortie parmi au moins deux canaux de sortie sur lesquels les signaux traités doivent être émis.

9. Procédé selon la revendication 8, dans lequel la sélection d'au moins un canal de sortie comprend la détermination d'une amplification pour chaque canal de sortie sélectionné.

10. Produit de programme informatique stocké sur un support lisible par un système informatique, comprenant des moyens de programme lisibles par ordinateur pour amener un ordinateur à exécuter les étapes du procédé selon l'une des revendications 1 à 9.

11. Système de communication comprenant
au moins deux réseaux de microphones comprenant chacun au moins deux microphones pour produire des signaux de microphone, au moins un convertisseur analogique/numérique ayant une entrée pour recevoir lesdits signaux de microphone et une sortie pour fournir des signaux de microphone numériques,
un moyen de traitement de signal numérique ayant une entrée pour recevoir les signaux de microphone numériques, étant configuré pour traiter les signaux de microphone numériques de chaque réseau de microphones par un conformateur de faisceau de signal utile (301) configuré pour obtenir un signal utile en transmettant des composantes de signal utile reçues d'une direction préférée sans atténuation et par un conformateur de faisceau de blocage (302) configuré pour obtenir un signal de blocage en supprimant la composante de signal utile, et

la présence d'une sortie pour fournir des signaux de sortie traités à au moins deux haut-parleurs, et dans lequel le moyen de traitement numérique du signal est en outre configuré pour détecter l'activité vocale pour chaque réseau de microphones en déterminant une puissance de signal utile, une puissance de signal de blocage et une puissance de signal de bruit de fond, la puissance de signal de bruit de fond étant déterminée sur la base de la puissance de signal utile et de la puissance de signal de blocage, et en comparant la puissance de signal utile avec la puissance de signal de blocage et la puissance de signal de bruit de fond,

et dans lequel le moyen de traitement du signal numérique est en outre configuré pour déterminer et appliquer une atténuation aux signaux de microphone numériques traités d'un réseau de microphones si aucune activité vocale n'est détectée par la comparaison de la puissance du signal utile avec la puissance du signal de blocage et la puissance du signal de bruit de fond pour le réseau de microphones.

12. Système de communication selon la revendication 11, dans lequel le moyen de traitement numérique des signaux est en outre configuré pour sélectionner au moins un haut-parleur parmi les au moins deux haut-parleurs (103) sur lesquels les signaux traités doivent être émis.

13. Cabine de véhicule comprenant un système de communication selon les revendications 11 ou 12 et au moins deux haut-parleurs (103), dans laquelle chaque réseau de microphones et chaque haut-parleur est associé à un siège passager.

Fig.1

Fig.2

Fig.3

Fig.4

Fig.5

Fig.6

**EP 1 623 600 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1116961 B1
- JP 7176178 A
- GB 2097121 A
- US 2003072461 A